# EUROPEAN PATENT SPECIFICATION

(11) **EP 2 119 607 B1**
(45) Date of publication and mention of the grant of the patent: **22.05.2013**
(21) Application number: 09006463.5
(22) Date of filing: 13.05.2009
(51) Int. Cl.: B60R 25/04

(54) **Motorcycle immobilizer**
Motorrad Wegfahrsperre
Dispositif d'immobilisation pour motocyclette

(30) Priority: 14.05.2008 JP 2008127347
(43) Date of publication of application: 18.11.2009
(73) Proprietor: Yamaha Motor Electronics Co., Ltd., Shuchi-gun Shizuoka 437-0292 (JP)
(72) Inventor: Tsuji, Mitsuru, Shuchi-gun Shizuoka 437-0292 (JP)
(74) Representative: Schoppe, Fritz

(56) References cited:
- EP-A- 0 604 981
- EP-A- 0 654 383
- EP-A- 1 067 028
- WO-A-01/34439
- US-A1- 2006 131 959

## Description

### BACKGROUND OF THE INVENTION

### Field of the Invention

The present invention relates to an immobilizer that prevents theft of a transport apparatus and a transport apparatus including the same.

### Description of the Background Art

In a motorcycle equipped with an immobilizer, power is not supplied to the immobilizer when a battery is in a discharged or disconnected state. Therefore, user authentication cannot be performed. As a result, even an authorized user cannot drive the motorcycle.

An unauthorized drive prevention device capable of performing the user authentication in a vehicle not having a battery has been proposed to solve such an inconvenience (see JP 2001-18753 A, for example). In the unauthorized drive prevention device, an output of a power generator driven by an engine is used as a power source of the unauthorized drive prevention device. In this case, the engine is started using a kick lever or the like to cause power to be supplied from the power generator to the unauthorized drive prevention device, and the user authentication is performed while the engine is rotated. When the user authentication is successful (when a user is recognized as the authorized user), the engine keeps rotating. Meanwhile, when the user authentication is unsuccessful (when the user is not recognized as the authorized user), the engine stops rotating.

The vehicle can be driven by a person other than the authorized user during the user authentication because the engine is started before the user authentication is completed (that is, before determination as to whether the user is the authorized user is made) in the foregoing unauthorized drive prevention device. In this case, rotation of the engine is stopped when the user authentication turns out to be unsuccessful during drive of the vehicle.

If a motorcycle is equipped with the foregoing unauthorized drive prevention device, however, the rotation of the engine is suddenly stopped while a vehicle body leans at corners, thus causing the motorcycle to fall over in some cases. Therefore, it is difficult to use the foregoing unauthorized drive prevention device in an actual vehicle.

WO 01/34439 A1 describes an engine ignition control unit for motorcycles to prevent motorcycles from being stolen. The unit comprises a cordless transmitter for transmitting a proper identification code for a driver; a cordless receiver portion for receiving the proper identification code from the cordless transmitter; and an electronically controllable ignition unit which receives a signal output from the cordless receiver portion and controls an ignition pulse output portion so that the engine operates below a certain number of revolutions during a predetermined period after starting until receiving the predetermined proper identification code.

### SUMMARY OF THE INVENTION

An object of the present invention is to provide an improved immobilizer that safely prevents theft independent from a battery state of an engine and even when user authentication is performed while an engine is rotated and a transport apparatus including the same.

This object is achieved by an immobilizer according to claim 1, and by a transport apparatus of claim 8.
(1) According to an aspect of the present invention, an immobilizer for preventing theft of a transport apparatus with an engine includes a detector that detects a rotational speed of the engine, an authenticator that performs user authentication while the engine is rotated, and a controller that controls the engine such that the rotational speed of the engine is suppressed to not more than a predetermined permissible rotational speed in a period from start to finish of the user authentication by the authenticator, and stops the engine when the user authentication by the authenticator is unsuccessful.
   In the immobilizer, the user authentication is performed by the authenticator while the engine is rotated. The rotational speed of the engine is detected by the detector. The engine is controlled by the controller such that the rotational speed of the engine is suppressed to not more than the predetermined permissible rotational speed in the period from the start to the finish of the user authentication by the authenticator. When the user authentication is unsuccessful, the engine is stopped by the controller. This prevents a sudden stop of the transport apparatus caused by a sudden stop of the engine. As a result, theft of the transport apparatus can be safely prevented even when the user authentication is performed while the engine is rotated.
(2) The controller may release suppression of the rotational speed of the engine when the user authentication by the authenticator is successful.
   In this case, rotation of the engine is maintained when the user authentication is successful. Thus, an authorized user can smoothly bring the transport apparatus into a normal driving state.
(3) The permissible rotational speed may be a rotational speed of the engine in an idling state. In this case, the rotational speed of the engine is suppressed to not more than the rotational speed in the idling state.
(4) The immobilizer may further include a power generator that rotates with the engine, and a rectifier that rectifies an alternating current supplied from the power generator, wherein the detector may detect the rotational speed of the engine based on a waveform of a voltage output from the rectifier.
   In this case, the existing power generator and rectifier in the transport apparatus can be effectively utilized for detecting the rotational speed of the engine. This prevents higher manufacturing cost due to an increase in the number of components.
(5) The immobilizer may further include a pulse generator that generates a pulse signal controlling an ignition timing of the engine in synchronization with rotation of the engine, wherein the detector may detect the rotational speed of the engine based on the pulse signal generated by the pulse generator.
   In this case, the existing pulse generator in the transport apparatus can be effectively utilized for detecting the rotational speed of the engine. This prevents higher manufacturing cost due to the increase in the number of components.
(6) The controller may control ignition of the engine such that the rotational speed of the engine is suppressed to not more than the permissible rotational speed in the period from the start to the finish of the user authentication by the authenticator.
   In this case, the rotational speed of the engine can be suppressed to not more than the permissible rotational speed with no additional components. This prevents higher manufacturing cost due to the increase in the number of components.
(7) The controller may control fuel injection of the engine such that the rotational speed of the engine is suppressed to not more than the permissible rotational speed in the period from the start to the finish of the user authentication by the authenticator.
   In this case, the rotational speed of the engine can be suppressed to not more than the permissible rotational speed with no additional components. This prevents higher manufacturing cost due to the increase in the number of components.
(8) According to another aspect of the present invention, a transport apparatus includes a main body, an engine provided in the main body, a driver that causes the main body to move by rotation of the engine, and an immobilizer that prevents theft, wherein the immobilizer includes a detector that detects a rotational speed of the engine, an authenticator that performs user authentication while the engine is rotated, and a controller that controls the engine such that the rotational speed of the engine is suppressed to not more than a predetermined permissible rotational speed in a period from start to finish of the user authentication by the authenticator, and stops the engine when the user authentication by the authenticator is unsuccessful.

In the transport apparatus, the driver causes the main body to move by the rotation of the engine. In this case, the user authentication is performed by the authenticator in the immobilizer while the engine is rotated. The rotational speed of the engine is detected by the detector. The engine is controlled by the controller such that the rotational speed of the engine is suppressed to not more than the predetermined permissible rotational speed in the period from the start to the finish of the user authentication by the authenticator. When the user authentication is unsuccessful, the engine is stopped by the controller. This prevents a sudden stop of the transport apparatus caused by a sudden stop of the engine. As a result, theft of the transport apparatus can be safely prevented even when the user authentication is performed while the engine is rotated.

According to the present invention, theft of the transport apparatus can be safely prevented even when the user authentication is performed while the engine is rotated.

### BRIEF DESCRIPTION OF THE DRAWINGS

Fig. 1 is a block diagram showing the configuration of an electrical system of a motorcycle including an immobilizer according to an embodiment of the present invention.
Fig. 2 is a side view of the motorcycle according to the present embodiment that is seen from one side.
Fig. 3 is a side view of the motorcycle according to the present embodiment that is seen from another side.
Fig. 4 is a flowchart showing operation of the immobilizer of Fig. 1.
Fig. 5 is a waveform diagram showing a voltage output from a rectifier regulator when a battery is in an open state.

### DESCRIPTION OF THE PREFERRED EMBODIMENTS

The embodiments of the present invention will be described referring to the drawings. In description of the following embodiments, an immobilizer according to the present invention is applied to a scooter-type motorcycle as an example of a transport apparatus.

### (1) Configurations of Immobilizer and Motorcycle

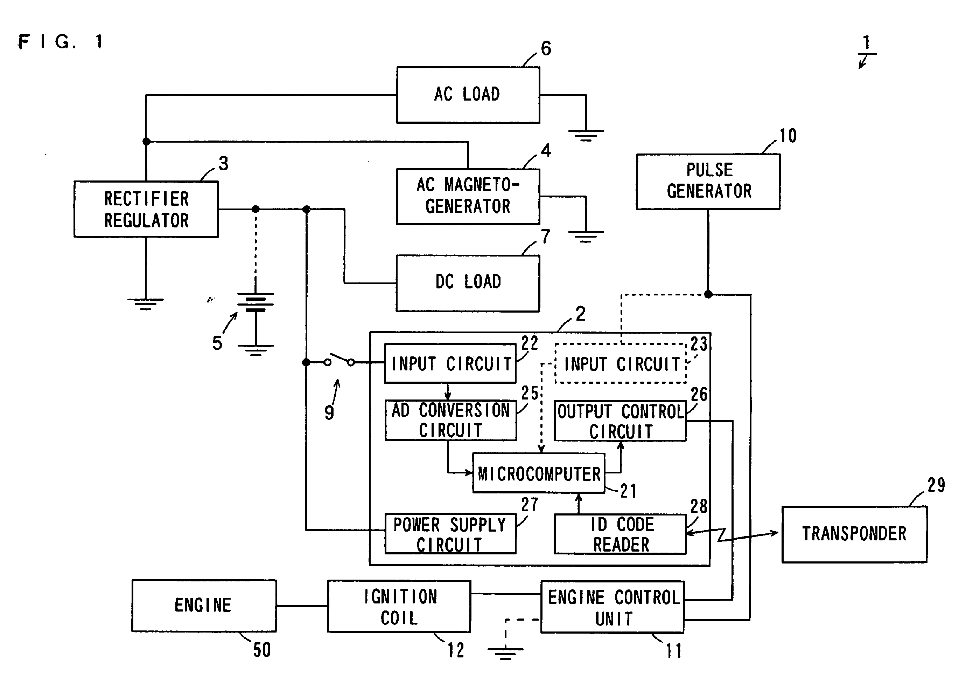

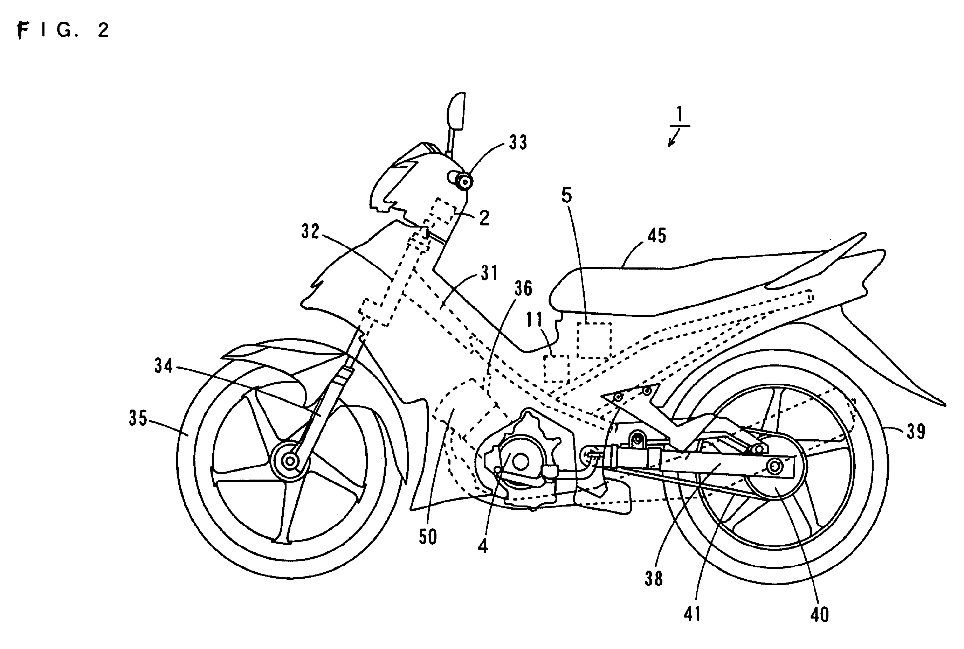

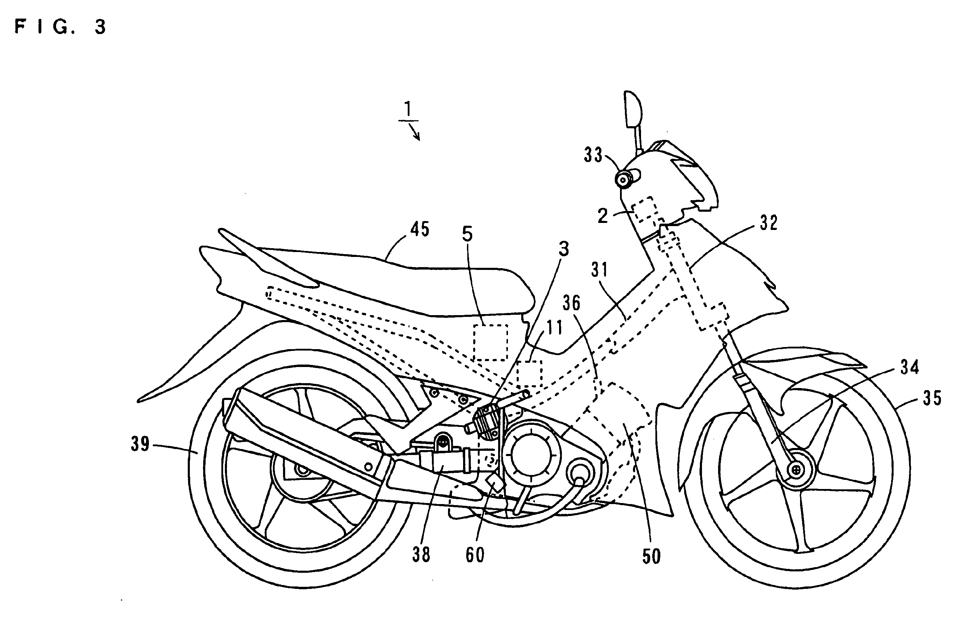

Fig. 1 is a block diagram showing the configuration of an electrical system of the motorcycle including the immobilizer according to an embodiment of the present invention. Fig. 2 is a side view of the motorcycle according to the present embodiment that is seen from one side, and Fig. 3 is a side view of the motorcycle according to the present embodiment that is seen from another side.

As shown in Fig. 1, the scooter-type motorcycle 1 includes the immobilizer 2, a rectifier regulator 3 of a half-wave rectifier type, an AC magneto-generator 4, a battery 5, an AC (Alternating Current) load 6, a DC (Direct Current) load 7, a main switch 9, a pulse generator 10, an engine control unit (hereinafter referred to as an ECU) 11, an ignition coil 12 and an engine 50.

The motorcycle 1 is a kick starting type motorcycle that starts the engine 50 by an operation of depressing a kick lever 60 shown in Fig. 3.

The immobilizer 2 of Fig. 1 includes a microcomputer 21, an input circuit 22, an AD (Analog-Digital) conversion circuit 25, an output control circuit 26, a power supply circuit 27 and an ID (identifier) reader 28. The microcomputer 21 incorporates a memory. Note that a transponder 29 is attached to a holder of a key for turning on and off the main switch 9.

The AC magneto-generator 4 is attached to the engine 50. The AC magneto-generator 4 rotates with the engine 50 by the operation of depressing the kick lever 60 of Fig. 3 to generate power to produce an AC voltage. The rectifier regulator 3 and the AC load 6 are connected to the AC magneto-generator 4. The AC load 6 includes a headlight and so on.

The battery 5 is removably connected to the rectifier regulator 3, and the DC load 7 is connected to the rectifier regulator 3. The DC load 7 includes a meter and so on. The input circuit 22 of the immobilizer 2 and the power supply circuit 27 of the immobilizer 2 are connected to the rectifier regulator 3 through the main switch 9. The rectifier regulator 3 half-wave rectifies an alternating current supplied from the AC magneto-generator 4, and outputs a voltage having a half-wave rectified waveform (hereinafter referred to as a half-wave rectified voltage).

The pulse generator 10, the output control circuit 26 of the immobilizer 2 and the ignition coil 12 are connected to the ECU 11. The ignition coil 12 is connected to an ignition plug for igniting an air-fuel mixture in the engine 50.

The pulse generator 10 is composed of a pick up coil (pulsar coil) and so on. The pulse generator 10 is arranged near the AC magneto-generator 4, and outputs a pulse signal as an ignition timing signal for each rotation of the AC magneto-generator 4.

The input circuit 22 is connected to the AD conversion circuit 25, and the AD conversion circuit 25 is connected to the microcomputer 21 in the immobilizer 2. The AD conversion circuit 25 converts a voltage input by the input circuit 22 to into a digital signal. The output control circuit 26 and the ID code reader 28 are connected to the microcomputer 21.

The power supply circuit 27 is configured to supply power to the input circuit 22, the AD conversion circuit 25, the microcomputer 21, the output control circuit 26 and the ID code reader 28.

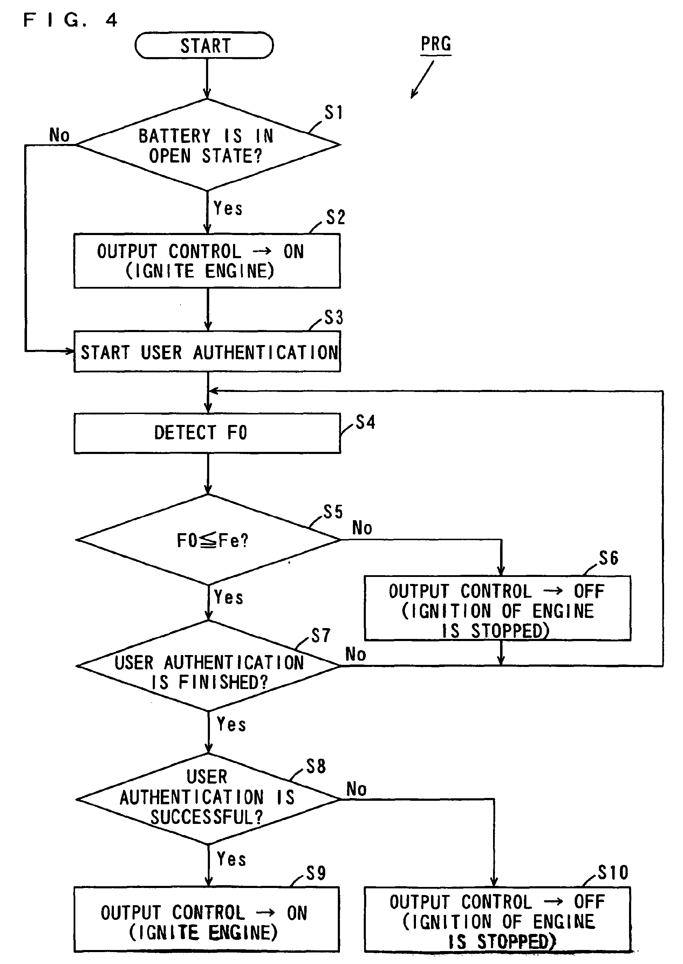

A user authentication program PRG and an ID code of an authorized user, described later with reference to Fig. 4, are rewritably and readably stored in the memory of the microcomputer 21. In addition, a safe stop speed Fe is readably stored in the memory of the microcomputer 21.

Here, the safe stop speed Fe means a rotational speed (permissible rotational speed) of the engine 50 at which the driving motorcycle 1 can be safely stopped. In the present embodiment, the safe stop speed Fe is set to an idling rotational speed (a rotational speed in an idling state of the engine 50). The idling rotational speed is 1500 r/min, for example.

In the motorcycle 1 shown in Figs. 2 and 3, a head pipe 32 is provided at a front end of a main body frame 31. A handle 33 is provided at an upper end of the head pipe 32. The immobilizer 2 is provided below the handle 33. A front fork 34 is attached to the head pipe 32. In this state, the front fork 34 can be rotated within a predetermined angular range with an axial center of the head pipe 32 as the center. A front wheel 35 is rotatably supported at a lower end of the front fork 34.

The engine 50 is provided at the center of the main body frame 31. An injector 36 is attached to the engine 50. The ignition coil 12 of Fig. 1 (not shown in Figs. 2 and 3) is provided in the main body frame 31 near a cylinder head of the engine 50. The ECU 11 is provided within a side cover below a seat 45. As shown in Fig. 2, the AC magneto-generator 4 is attached to the engine 50, and the pulse generator 10 of Fig. 1 (not shown in Figs. 2 and 3) is provided near the AC magneto-generator 4.

In addition, the rectifier regulator 3 and the kick lever 60 are provided at the center of the main body frame 31 as shown in Fig. 3. A rear arm 38 is connected to the main body frame 31 so as to extend to the rear of the engine 50. The rear arm 38 rotatably holds a rear wheel 39 and a rear wheel driven sprocket 40. A chain 41 is attached to the rear wheel driven sprocket 40.

### (2) Operation of the Immobilizer

Next, description is made of operation of the immobilizer 2 according to the present embodiment. Here, a state of no power supply from the battery 5 to the immobilizer 2 due to a discharged or disconnected state of the battery 5 is referred to as an open state. Meanwhile, a state of power supply from the battery 5 to the immobilizer 2 is referred to as a closed state.

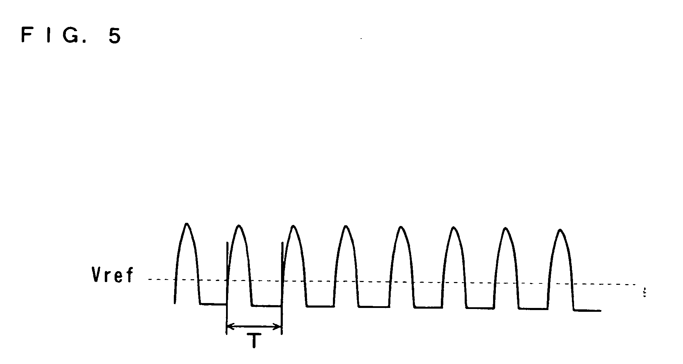

Fig. 4 is a flowchart showing the operation of the immobilizer 2 of Fig. 1. Fig. 5 is a waveform diagram showing the voltage output from the rectifier regulator 3 when the battery 5 is in the open state.

A user turns on the main switch 9 and depresses the kick lever 60. Thus, the AC magneto-generator 4 rotates to generate power, and supplies the alternating current to the rectifier regulator 3. The rectifier regulator 3 half-wave rectifies the alternating current supplied from the AC magneto-generator 4, and outputs the half-wave rectified voltage.

When the battery 5 is in the closed state, the half-wave rectified voltage output from the rectifier regulator 3 is smoothed by the battery 5, and the smoothed voltage is applied to the input circuit 22 and the power supply circuit 27 of the immobilizer 2 through the main switch 9. When the battery 5 is in the open state, the half-wave rectified voltage output from the rectifier regulator 3 is directly applied to the input circuit 22 and the power supply circuit 27 of the immobilizer 2 through the main switch 9. This causes the immobilizer 2 to operate. In this case, the power supply circuit 27 applies power to the microcomputer 21, the input circuit 22, the AD conversion circuit 25 and the ID code reader 28.

In Fig. 4, the microcomputer 21 first determines whether the battery 5 is in the open state based on the waveform of the voltage input by the input circuit 22 in a battery state determination process (Step S1). That is, the microcomputer 21 determines that the battery 5 is in the open state when the input voltage has the half-wave rectified waveform, and determines that the battery 5 is not in the open state (but in the closed state) when the input voltage has the smoothed waveform.

When a result of the determination indicates that the battery 5 is in the open state, power is not supplied from the battery 5 to the immobilizer 2. Therefore, the microcomputer 21 proceeds to a first engine ignition process (Step S2) and brings the output control circuit 26 into an ON state. Thus, power is supplied from the output control circuit 26 to the ECU 11, starting operation of the ECU 11. In this case, a high voltage is generated in the ignition coil 12 connected to the ECU 11, and the ignition plug ignites the air-fuel mixture in the engine 50. As a result, the engine 50 is started.

Meanwhile, the pulse generator 10 supplies the ignition timing signal to the ECU 11 for each rotation of a crank of the engine 50 according to the rotation of the AC magneto-generator 4. Thus, the high voltage is generated in the ignition coil 12 in response to the ignition timing signal, and the ignition plug ignites the air-fuel mixture in the engine 50. As a result, the engine 50 keeps rotating, and power is continuously supplied from the AC magneto-generator 4 to the immobilizer 2 through the rectifier regulator 3 and the main switch 9.

In this state, the microcomputer 21 proceeds to a user authentication start process (Step S3), and starts user authentication. In the user authentication, the microcomputer 21 reads an ID code stored in the transponder 29 through the ID code reader 28, and compares the ID code with the ID code stored in advance in the memory.

During the user authentication, the microcomputer 21 detects a current engine rotational speed F0 based on the waveform of the voltage output from the rectifier regulator 3 in a current engine rotational speed detection process (Step S4). The current engine rotational speed F0 means the rotational speed of the engine 50 at the present time, and changes with time.

When the battery 5 is in the open state, the half-wave rectified voltage shown in Fig. 5 is output from the rectifier regulator 3 to be input to the input circuit 22 of the immobilizer 2 through the main switch 9. At this time, the number of half waves generated by one rotation of the engine 50 is proportional to the number of poles of the AC magneto-generator 4. For example, four half-waves are generated by one rotation of the engine 50 when the AC magneto-generator 4 has eight poles, and three half-waves are generated by one rotation of the engine 50 when the AC magneto-generator 4 has six poles. Based on the proportional relationship, the microcomputer 21 calculates the rotational speed of the engine 50 from a period T of the voltage waveform to detect the current engine rotational speed F0. Note that the period T is a time period from a time point where the voltage exceeds a predetermined threshold value Vref to a next time point where the voltage exceeds the threshold value Vref.

Then, the microcomputer 21 proceeds to a current engine rotational speed determination process (Step S5), reads out the safe stop speed Fe from the memory, and determines whether the current engine rotational speed F0 is not more than the safe stop speed Fe.

When a result of the determination indicates that the current engine rotational speed F0 is more than the safe stop speed Fe (that is, the current engine rotational speed F0 exceeds the safe stop speed Fe), the microcomputer 21 proceeds to a first engine ignition stop process (Step S6) to temporarily brings the output control circuit 26 into an OFF state in order to reduce the rotational speed of the engine 50. Thus, the high voltage is not generated in the ignition coil 12, and the ignition of the air-fuel mixture in the engine 50 by the ignition plug is temporarily stopped. After that, the microcomputer 21 again brings the output control circuit 26 into the ON state, and returns to the current engine rotational speed detection process (Step S4).

When the result of the determination in the current engine rotational speed determination process (Step S5) indicates that the current engine rotational speed F0 is not more than the safe stop speed Fe, the microcomputer 21 proceeds to a user authentication finish determination process (Step S7) and determines whether the user authentication is finished.

When a result of the determination indicates that the user authentication is not finished, the microcomputer 21 shifts to the current engine rotational speed detection process (Step S4) and repeats the processes of Steps S4 to S7 until the user authentication is finished. As a result, the rotational speed of the engine 50 is suppressed to not more than the safe stop speed Fe until the user authentication is finished.

When a result of the determination in the user authentication finish determination process (Step S7) indicates that the user authentication is finished, the microcomputer 21 proceeds to a user authentication result determination process (Step S8), and determines whether the user authentication is successful. When the ID code stored in the transponder 29 and the ID code stored in advance in the memory coincide with each other, it is determined that the user authentication is successful. When the ID codes do not coincide with each other, it is determined that the user authentication is unsuccessful.

When a result of the determination indicates that the user authentication is successful, it is considered that a person who tries to drive the motorcycle 1 is the authorized user. Therefore, the microcomputer 21 proceeds to a second engine ignition process (Step S9), and keeps the output control circuit 26 in the ON state. Thus, the high voltage is continuously generated in the ignition coil 12 in response to the ignition timing signal, and the ignition plug ignites the air-fuel mixture in the engine 50. As a result, the authorized user can drive the motorcycle 1 as usual.

Meanwhile, when the result of the determination in the user authentication result determination process (Step S8) indicates that the user authentication is unsuccessful, it is considered that the person who tries to drive the motorcycle 1 is not the authorized user. Therefore, the microcomputer 21 proceeds to a second engine ignition stop process (Step S10), and brings the output control circuit 26 into the OFF state. Thus, the high voltage is not generated in the ignition coil 12, and the ignition of the air-fuel mixture in the engine 50 by the ignition plug is stopped. In this case, since the rotational speed of the engine 50 is suppressed to not more than the safe stop speed Fe, the engine 50 is safely stopped. As a result, the motorcycle 1 is safely stopped to prevent the motorcycle 1 from falling over, and the theft of the motorcycle 1 can be prevented.

Meanwhile, when the result of the determination in the battery state determination process (Step S1) indicates that the battery 5 is not in the open state, power is supplied from the battery 5 to the immobilizer 2. Therefore, the microcomputer 21 immediately proceeds to the user authentication start process (Step S3) and performs the user authentication. In this case, power is supplied from the battery 5 to the immobilizer 2.

### (3) Effects of the Immobilizer

As described above, the rotational speed of the engine 50 is suppressed to not more than the safe stop speed Fe during the period from start to finish of the user authentication, and the engine 50 shifts from the low speed rotation state to the stop state when the user authentication is unsuccessful in the immobilizer 2 according to the present embodiment. Therefore, the motorcycle 1 is prevented from stalling due to a rapid decrease in the rotational speed of the engine 50. As a result, the motorcycle 1 can be safely stopped and theft of the motorcycle 1 can be prevented.

Moreover, since the rectifier regulator 3, which is an existing component, is used for detecting the rotational speed of the engine 50, new components and wiring need not be added. This avoids higher manufacturing cost due to an increase in the number of the components.

Furthermore, since the rotational speed of the engine 50 is suppressed to not more than the safe rotational sped Fe by temporarily stopping the ignition of the air-fuel mixture in the engine 50 by the ignition plug, new components and wiring need not be added. This avoids higher manufacturing cost due to the increase in the number of the components.

### (4) Other Embodiments

(a) While the rotational speed of the engine 50 is detected based on the waveform of the voltage output from the rectifier regulator 3 when the battery 5 is in the open state in the foregoing embodiment, the method of detecting the rotational speed of the engine 50 is not limited to the above-described example. For example, an input circuit 23 connected to the microcomputer 21 may be further provided in the immobilizer 2 as indicated by the broken line in Fig. 1, and the ignition timing signal from the pulse generator 10 may be input to the microcomputer 21 of the immobilizer 2 through the input circuit 23. Accordingly, the microcomputer 21 can detect the rotational speed of the engine 50 based on the ignition timing signal.
   In this case, only a wiring connecting the pulse generator 10, which is the existing component, and the input circuit 23 can be added for detecting the rotational speed of the engine 50, and new components need not be added. This avoids higher manufacturing cost due to the increase in the number of the components.
(b) While the alternating current supplied from the AC magneto-generator 4 is half-wave rectified by the rectifier regulator 3 and the rotational speed of the engine 50 is detected based on the half-wave rectified voltage output from the rectifier regulator 3 in the above-described embodiment, the present invention is not limited to this. For example, the threshold value Vref may be suitably determined, the alternating current output from the AC magneto-generator 4 may be full-wave rectified, and the rotational speed of the engine 50 may be detected based on the voltage having a full-wave rectified waveform.
(c) While the safe stop speed Fe is set to the idling rotational speed in the foregoing embodiment, the safe stop speed Fe is not limited to this. The safe stop speed Fe can be set to a value other than the idling rotational speed depending on driving characteristics of the motorcycle 1 and so on.
(d) While the rotational speed of the engine 50 is suppressed to not more than the safe rotational speed Fe by temporarily stopping the ignition of the air-fuel mixture in the engine 50 by the ignition plug in the foregoing embodiment, the method of suppressing the rotational speed of the engine 50 is not limited to this. For example, the rotational speed of the engine 50 may be suppressed by temporarily stopping fuel injection by the injector 36 shown in Figs. 2 and 3.

In this case, new components and wiring need not be added. This avoids higher manufacturing cost due to the increase in the number of the components.
(e) While the engine 50 is started by the kick lever 60 in the foregoing embodiment, the immobilizer 2 can be applied to a motorcycle not having the kick lever 60. In this case, the user wheels the motorcycle when the battery 5 is in the open state to start the engine 50.
(f) While the immobilizer 2 is applied to the scooter-type motorcycle 1 as an example of the transport apparatus in the foregoing embodiment, the present invention is not limited to this. The immobilizer 2 may be applied to a motorcycle other than the scooter type motorcycle (a saddle-straddling type motorcycle, for example).

The immobilizer 2 can be applied to various transport apparatuses such as a three-wheeled motor vehicle, a four-wheeled motor vehicle and a ship.

Furthermore, the immobilizer 2 can be applied to a transport apparatus not having a battery.

### (5) Correspondences between Elements in the Claims and Parts in Embodiments

In the following paragraphs, non-limiting examples of correspondences between various elements recited in the claims below and those described above with respect to various embodiments of the present invention are explained.

In the above-described embodiments, the AC magneto-generator 4, the rectifier regulator 3 and the microcomputer 21 are examples of a detector, the pulse generator 10 and the microcomputer 21 are other examples of the detector, the microcomputer 21, the ID code reader 28 and the transponder 29 are examples of an authenticator, the microcomputer 21, the output control circuit 26, the ECU 11, the ignition coil 12 and the ignition plug are examples of a controller, the microcomputer 21 and the injector 36 are other examples of a controller, and the safe stop speed Fe is an example of an permissible rotational speed.

The AC magneto-generator 4 is an example of a power generator, the rectifier regulator 3 is an example of a rectifier, and the pulse generator 10 is an example of a pulse generator.

The motorcycle 1 excluding the immobilizer 2 and the rear wheel 39 are an example of a main body, and the rear wheel 39 is an example of a drive wheel.

As each of various elements recited in the claims, various other elements having configurations or functions described in the claims can be also used.

## Claims

1. An immobilizer for preventing theft of a transport apparatus with an engine (50) and a battery (5), the immobilizer comprising:
a detector that detects a rotational speed of the engine (50);
an authenticator that performs user authentication; and
a controller (21) that is configured to:
determine (S1) a state of the battery (5),
start (S3) the authenticator, wherein in an open battery state, the engine (50) is started prior to starting the authenticator, and wherein in a closed battery state the engine (50) is not started prior to starting the authenticator,
control (S4-S7) the engine (50) such that the rotational speed (F0) of the engine (50) is suppressed to not more than a predetermined permissible rotational speed (Fe) in a period from start to finish of the user authentication by the authenticator, and
output to the engine (50) an off signal when the user authentication by the authenticator is unsuccessful (S10), or an on signal when the user authentication by the authenticator is successful (S9).

2. The immobilizer according to claim 1, wherein in case the engine (50) is running during the authentication the controller (21) releases suppression of the rotational speed of the engine (50) when the user authentication by the authenticator is successful.

3. The immobilizer according to claim 1, wherein the permissible rotational speed (Fe) is a rotational speed of the engine (50) in an idling state.

4. The immobilizer according to claim 1, further comprising:
a power generator (4) that rotates with the engine (50); and
a rectifier (3) that rectifies an alternating current supplied from the power generator (4), wherein
the detector detects the rotational speed of the engine (50) based on a waveform of a voltage output from the rectifier (3).

5. The immobilizer according to claim 1, further comprising a pulse generator (10) that generates a pulse signal controlling an ignition timing of the engine (50) in synchronization with rotation of the engine (50), wherein
the detector detects the rotational speed of the engine (50) based on the pulse signal generated by the pulse generator.

6. The immobilizer according to claim 1, wherein the controller controls ignition of the engine (50) such that the rotational speed of the engine (50) is suppressed to not more than the permissible rotational speed (Fe) in the period from the start to the finish of the user authentication by the authenticator.

7. The immobilizer according to claim 1, wherein the controller controls fuel injection of the engine (50) such that the rotational speed of the engine (50) is suppressed to not more than the permissible rotational speed (Fe) in the period from the start to the finish of the user authentication by the authenticator.

8. A transport apparatus comprising:
a main body;
an engine (50) provided in the main body;
a driver that causes the main body to move by rotation of the engine (50); and
an immobilizer according to one of claims 1 to 7.

## Patentansprüche

1. Ein Immobilisierer zum Verhindern des Diebstahls einer Transportvorrichtung mit einem Motor (50) und einer Batterie (5), wobei der Immobilisierer folgende Merkmale aufweist:
einen Detektor, der eine Drehgeschwindigkeit des Motors (50) erfasst;
eine Authentifizierungseinrichtung, die eine Benutzerauthentifizierung ausführt; und
eine Steuerung (21), die ausgebildet ist zum:
Bestimmen (S1) eines Zustands der Batterie (5),
Starten (S3) der Authentifizierungseinrichtung, wobei in einem offenen Batteriezustand der Motor (50) vor dem Starten der Authentifizierungseinrichtung gestartet wird, und wobei in einem geschlossenen Batteriezustand der Motor (50) nicht vor dem Starten der Authentifizierungseinrichtung gestartet wird,
Steuern (S4-S7) des Motors (50) derart, dass die Drehgeschwindigkeit (F0) des Motors (50) auf nicht mehr als eine vorbestimmte zulässige Drehgeschwindigkeit (Fe) in einer Periode von einem Start zum Ende der Benutzerauthentifizierung durch die Authentifizierungseinrichtung unterdrückt wird, und
Ausgeben eines Aus-Signals an den Motor (50), wenn die Benutzerauthentifizierung durch die Authentifizierungseinrichtung nicht erfolgreich ist (S 10), oder eines Ein-Signals, wenn die Benutzerauthentifizierung durch die Authentifizierungseinrichtung erfolgreich ist (S9).

2. Der Immobilisierer gemäß Anspruch 1, bei dem in dem Fall, dass der Motor (50) während der Authentifizierung läuft, die Steuerung (21) die Unterdrückung der Drehgeschwindigkeit des Motors (50) freigibt, wenn die Benutzerauthentifizierung durch die Authentifizierungseinrichtung erfolgreich ist.

3. Der Immobilisierer gemäß Anspruch 1, bei dem die zulässige Drehgeschwindigkeit (Fe) eine Drehgeschwindigkeit des Motors (50) in einem Leerlaufzustand ist.

4. Der Immobilisierer gemäß Anspruch 1, der ferner folgende Merkmale aufweist:
einen Leistungsgenerator (4), der sich mit dem Motor (50) dreht; und
einen Gleichrichter (3), der einen Wechselstrom gleichrichtet, der von dem Leistungsgenerator (4) geliefert wird, wobei
der Detektor die Drehgeschwindigkeit des Motors (50) basierend auf einer Wellenform einer Spannung erfasst, die aus dem Gleichrichter (3) ausgegeben wird.

5. Der Immobilisierer gemäß Anspruch 1, der ferner einen Pulsgenerator (10) aufweist, der ein Pulssignal erzeugt, das eine Zündungszeitgebung des Motors synchron mit der Drehung des Motors (50) steuert, wobei
der Detektor die Drehgeschwindigkeit des Motors (50) basierend auf dem Pulssignal erfasst, das durch den Pulsgenerator erzeugt wird.

6. Der Immobilisierer gemäß Anspruch 1, bei dem die Steuerung die Zündung des Motors (50) derart steuert, dass die Drehgeschwindigkeit des Motors (50) auf nicht mehr als die zulässige Drehgeschwindigkeit (Fe) in der Periode von dem Start bis zu dem Ende der Benutzerauthentifizierung durch die Authentifizierungseinrichtung unterdrückt wird.

7. Der Immobilisierer gemäß Anspruch 1, bei dem die Steuerung die Kraftstoffeinspritzung des Motors (50) derart steuert, dass die Drehgeschwindigkeit des Motors (50) auf nicht mehr als die zulässige Drehgeschwindigkeit (Fe) in der Periode von dem Start bis zu dem Ende der Benutzerauthentifizierung durch die Authentifizierungseinrichtung unterdrückt wird.

8. Eine Transportvorrichtung, die folgende Merkmale aufweist:
einen Hauptkörper;
einen Motor (50), der in dem Hauptkörper bereitgestellt ist;
einen Treiber, der verursacht, dass sich der Hauptkörper durch Drehung des Motors (50) bewegt; und
einen Immobilisierer gemäß einem der Ansprüche 1 bis 7.

## Revendications

1. Dispositif d'immobilisation pour empêcher le vol d'un appareil de transport avec un moteur (50) et une batterie (5), le dispositif d'immobilisation comprenant:
un détecteur qui détecte une vitesse de rotation du moteur (50);
un authentificateur qui effectue une authentification d'utilisateur; et
un contrôleur (21) qui est configuré pour:
déterminer (S1) un état de la batterie (5),
démarrer (S3) l'authentificateur, où, dans un état de batterie ouverte, le moteur (50) est démarré avant de démarrer l'authentificateur, et où, dans un état de batterie fermé, le moteur (50) n'est pas démarré avant de démarrer l'authentificateur,
commander (S4-S7) le moteur (50) de sorte que la vitesse de rotation (F0) du moteur (50) soit supprimée à pas plus d'une vitesse de rotation admissible prédéterminée (Fe) dans un laps de temps du début à la fin de l'authentification d'utilisateur par l'authentificateur, et
sortir vers le moteur (50) un signal d'arrêt lorsque l'authentification d'utilisateur par l'authentificateur n'est pas fructueuse (S10), ou un signal de marche lorsque l'authentification d'utilisateur par l'authentificateur est fructueuse (S9).

2. Dispositif d'immobilisation selon la revendication 1, dans lequel, au cas où le moteur (50) tourne pendant l'authentification, le contrôleur (21) libère la suppression de la vitesse de rotation du moteur (50) lorsque l'authentification d'utilisateur par l'authentificateur est fructueuse.

3. Dispositif d'immobilisation selon la revendication 1, dans lequel la vitesse de rotation admissible (Fe) est une vitesse de rotation du moteur (50) à l'état de marche à vide.

4. Dispositif d'immobilisation selon la revendication 1, comprenant par ailleurs:
un générateur de courant (4) qui tourne avec le moteur (50); et
un redresseur (3) qui redresse un courant alternatif alimenté par le générateur de courant (4), où
le détecteur détecte la vitesse de rotation du moteur (50) sur base d'une forme d'onde d'une sortie de tension du rectificateur (3).

5. Dispositif d'immobilisation selon la revendication 1, comprenant par ailleurs un générateur d'impulsions (10) qui génère un signal d'impulsion commandant un moment d'allumage du moteur (50) en synchronisation avec la rotation du moteur (50), où
le détecteur détecte la vitesse de rotation du moteur (50) sur base du signal d'impulsion généré par le générateur d'impulsions.

6. Dispositif d'immobilisation selon la revendication 1, dans lequel le contrôleur commande l'allumage du moteur (50) de sorte que la vitesse de rotation du moteur (50) soit supprimée à pas plus de la vitesse de rotation admissible (Fe) dans le laps de temps du début à la fin de l'authentification d'utilisateur par l'authentificateur.

7. Dispositif d'immobilisation selon la revendication 1, dans lequel le contrôleur commande l'injection de carburant du moteur (50) de sorte que la vitesse de rotation du moteur (50) soit supprimée à pas plus de la vitesse de rotation admissible (Fe) dans le laps de temps du début à la fin de l'authentification d'utilisateur par l'authentificateur.

8. Appareil de transport, comprenant:
un corps principal;
un moteur (50) prévu dans le corps principal;
un conducteur qui fait déplacer le corps principal par rotation du moteur (50); et
un dispositif d'immobilisation selon l'une des revendications 1 à 7.
